(19) Europäisches Patentamt
European Patent Office
Office européen des brevets

(11) Veröffentlichungsnummer: **0 296 507 A2**

(12) # EUROPÄISCHE PATENTANMELDUNG

(21) Anmeldenummer: **88109722.4**

(22) Anmeldetag: **18.06.88**

(51) Int. Cl.4: **C08K 5/00 , C08J 3/24**

(30) Priorität: **25.06.87 DE 3720984**

(43) Veröffentlichungstag der Anmeldung:
**28.12.88 Patentblatt 88/52**

(84) Benannte Vertragsstaaten:
**AT BE CH DE ES FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Brindöpke, Gerhard, Dr.**
**Loreleistrasse 18**
**D-6230 Frankfurt am Main 80(DE)**

(54) **Härtbare Mischungen und deren Verwendung.**

(57) Härtbare Mischungen auf der Basis von

A) Verbindungen, die Hydroxylgruppen enthalten,

B) härtenden Verbindungen,

C) Katalysatoren und

D) gegebenenfalls einem Verdünnungsmittel sowie gegebenenfalls weiteren Zusatzstoffen, dadurch gekennzeichnet, daß als härtende Verbindungen B) solche Verbindungen dienen, die mindestens zwei Enolether-Gruppen der Formel (I)

$$>C = \overset{|}{C} - O - \qquad (I)$$

enthalten.

Die erfindungsgemäßen Mischungen härten bereits bei niedrigen Temperaturen schnell und eignen sich insbesondere zur Herstellung von Formkörpern, Überzügen oder als Bestandteil in Lacken.

EP 0 296 507 A2

## Härtbare Mischungen und deren Verwendung

Es ist aus der Chemie der Schutzgruppen bekannt, hydroxylgruppenhaltige Verbindungen mit Vinyl- oder Enolethern wie z.B. Tetrahydropyran oder 2-Methoxypropen unter Bildung von Acetalen umzusetzen. (T.W. Greene, Protective Groups in Organic Synthesis J. Wiley & Sons New York 1981).

Ferner ist es bekannt, ein OH-Gruppen enthaltendes Acrylatharz bzw. ein mit Σ-Caprolacton modifiziertes Acrylatharz im Gemisch mit Polyisocyanaten als Zweikomponentenlack zu verwenden (DE-Patentschriften 3 005 945, 3 027 776 und 3 148 022). Die bekannten Produkte haben sich zum Teil gut bewährt, wenngleich die Verwendung von Isocyanaten nicht unbedenklich ist.

Es wurde daher auch schon versucht, umweltfreundlichere Produkte herzustellen, indem man von Systemen ohne freies Isocyanat ausgeht.

So ist in einer anderen Druckschrift ein Oxazolidin enthaltendes Acrylatharz beschrieben, bei dem Wasser oder Luftfeuchtigkeit als Härter benutzt werden (EP-Offenlegungsschrift 34 720). Dieses System hat den Nachteil, daß die gehärtete Oberfläche einem tieferen Eindringen von Wasser in die unteren Schichten des Überzugs entgegenwirkt und so eine vollständige Härtung durch die ganze Schichtdicke verhindert.

Es ist auch weiterhin ein ohne Isocyanat reagierendes Zweikomponenten-System bekannt (vgl. Coating <u>17</u> (1984), S. 21-22). Dieses besteht aus einem Epoxidgruppen enthaltenden Acrylharz, das mit einem anderen Acrylharz, das tertiäre Aminogruppen enthält, härtbar ist. Bei dem nach diesem Verfahren hergestellten Produkt führt der zu geringe Vernetzungsgrad zu einer ungenügenden chemischen Beständigkeit, so daß die mit diesem System hergestellten Überzüge nur für ein beschränktes Anwendungsgebiet geeignet sind.

Der Erfindung lag daher die Aufgabe zugrunde, ein Vernetzungsprinzip zu entwickeln, das zur Härtung keine freien Isocyanate benötigt, also umweltfreundlich ist und außerdem härtbare Mischungen bereitzustellen, welche bezüglich der einzelnen vorstehend aufgeführten Nachteile oder zumindest bezüglich deren Kombination eine Verbesserung erbringen.

Es wurde nun gefunden, daß sich diese Aufgabe überraschenderweise lösen läßt durch härtbare Mischungen auf der Basis von

A) Verbindungen, die Hydroxylgruppen enthalten,

B) härtbaren Verbindungen,

C) Katalysatoren und

D) gegebenenfalls einem Verdünnungsmittel sowie gegebenenfalls weiteren Zusatzstoffen, dadurch gekennzeichnet, daß als härtende Verbindungen B) solche Verbindungen dienen, die mindestens zwei Enolether(Vinylether)-Gruppen der Formel (I)

$$>C=\overset{|}{C}-O- \qquad \text{(I)}$$

enthalten.

Gegenstand der Erfindung ist weiterhin die Verwendung dieser härtbaren Mischungen, insbesondere zur Herstellung von Formkörpern und Überzügen sowie als Bestandteil in Lacken oder Klebern.

Die erfindungsgemäß eingesetzten Härter B) enthalten mindestens zwei, vorzugsweise 2 bis 30, insbesondere 2 bis 10, Gruppen der Formel (I), die indirekt miteinander verbunden sind. Als indirekte Verknüpfung kommt hier beispielsweise der Rest $R_4$ (siehe nachfolgend) in Frage. Diese indirekte Verknüpfung kann dabei auch ein Teil der Kette eines Oligomeren und/oder Polymeren sein, d.h. die Gruppen (I) können in den Seitenketten der Hauptkette des Oligomeren bzw. Polymeren vorhanden sein oder diese Seitenketten bilden. Falls die Gruppen (I) in einem Oligomeren bzw. Polymeren enthalten sind, der Härter B) also ein Oligomeres oder Polymeres darstellt, ist die Menge an Gruppen (I) im allgemeinen so groß, daß das C=C-Äquivalentgewicht zwischen 50 und 1800, vorzugsweise zwischen 200 und 1200 liegt. Das Molekulargewicht Mw (Gewichtsmittel) sollte zumeist 25000 nicht überschreiten und beträgt vorzugsweise 500 bis 20000, insbesondere 500 bis 10000.

Bevorzugt besitzen die erfindungsgemäßen Härter B) die allgemeine Formel (II)

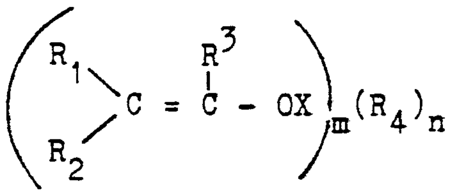

(II)

in der bedeuten:

$R_1$, $R_2$, $R_3$ = gleich oder verschieden Wasserstoff, Kohlenwasserstoffrest, vorzugsweise Alkylrest mit 1 bis 10, insbesondere 1 bis 4 C-Atomen, Cycloalkylrest mit 5 bis 12, insbesondere 6 bis 10 C-Atomen oder Arylrest mit 6 bis 15, insbesondere 6 bis 10 C-Atomen, wobei diese Reste $R_1$ bis $R_3$ jeweils auch Bestandteil eines vorzugsweise fünf- oder sechsgliedrigen Ringes sein können;

$R_4$ = ein m-wertiger, verzweigter oder unverzweigter Kohlenwasserstoffrest mit 1 bis 50 C-Atomen, vorzugsweise 2 bis 30 C-Atomen, der gegebenenfalls Heteroatome und/oder funktionelle Gruppen aus der Gruppe O, NH-, Ester-, Amid-, Urethan-, Harnstoff-und Ethergruppen enthalten kann;

X = chemische Bindung (bei n = 1), oder Kohlenwasserstoffrest, vorzugsweise Alkylrest mit 1 bis 10, insbesondere 1 bis 4 C-Atomen, Cycloalkylrest mit 5 bis 12, insbesondere 6 bis 10 C-Atomen oder Arylrest mit 6 bis 15, insbesondere 6 bis 10 C-Atomen (bei n = 0), oder zusammen mit $R_1$ oder mit $R_2$ gleich Bestandteil eines gegebenenfalls substituierten, vorzugsweise fünf- oder sechsgliedrigen Ringes, wobei $R_4$ dann an diesem Ring sitzt (bis n = 1);

m = mindestens 2, vorzugsweise 2 bis 30, insbesondere 2 bis 10;

n = 0 oder 1; mit der Maßgabe , daß bei n = 0 einer der Reste $R_1$ bis $R_3$ die Bedeutung von $R_4$ besitzen muß und daß bei n = 1 keiner der Reste $R_1$ bis $R_3$ die Bedeutung von $R_4$ hat.

Falls der Rest X Teil eines Ringsystems ist, besitzen die entsprechenden Härter B) vorzugsweise die nachstehenden Formeln (III) oder (IV)

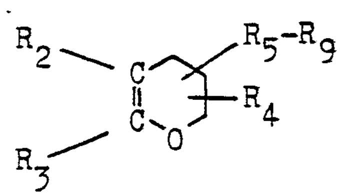

(III)

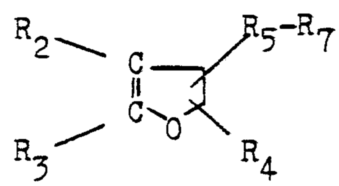

(IV)

in denen $R_2$, $R_3$ und $R_4$ die obige Bedeutung haben und $R_5$ bis $R_9$ bzw. $R_5$ bis $R_7$ die gleiche Bedeutung wie $R_1$ bis $R_3$ besitzen.

Oligomere oder polymere Härter B) werden beispielsweise durch Anlagerung von niedermolekularen Bisenol- oder Bisvinylethern der Formeln (II) bis (IV) an OH-gruppenhaltige Oligomere oder Polymere (Polyole) erhalten. Die Mengenverhältnisse sind dabei so zu wählen, daß die entstehenden Addukte noch freie Enolether- bzw. Vinylethergruppen aufweisen. Als Polyole kommen dabei grundsätzlich die gleichen in Frage, wie nachfolgend bei den Verbindungen A) beschrieben, wobei allerdings für vorliegende Zwecke zumeist die niedermolekularen Vertreter mit Molekulargewichten (Mw) von bis zu 1000 verwendet werden. Falls diese Addukte neben Enol(Vinyl)ethergruppen auch noch überschüssige OH-Gruppen enthalten, besitzen sie selbstvernetzende Eigenschaften.

Als Beispiele für geeignete Härter B) seien hier genannte: Ethylenglykoldivinylether, Butandioldivinylether, Butandioldiisopropenylether, Neopentylglykoldiisopropenylether, der Tischtschenkoester des dimeren Acroleins. Weiterhin kommen als oligomere oder polymere Vertreter Additionsprodukte dieser niedermolekularen Ether an Polyole in Frage, wobei als Polyole einsetzbar sind: mehrwertige Alkohole wie Ethandiol, die verschiedenen Propan-, Butan-, Pentan-, Hexan-, Octandiole oder deren Homologe, die entsprechenden oligomeren Ether, ferner Glycerin Trimethylolethan oder -propan, Hexantriol, Pentaerythrit, Dipentaerythrit,

Sorbit, Polyvinylalkohol, Bisphenol A, Resorcin, Hydrochinon oder dergleichen, OH-gruppenhaltige Isocyanurate, wie Trishydroxyethylisocyanurat, OH-gruppenhaltige Epoxidharze, OH-gruppenhaltige Polyether, OH-gruppenhaltige Polyester oder OH-gruppenhaltige Polyacrylate, wobei das Molekulargewicht (Mw) dieser Polymeren vorzugsweise zwischen 500 und 20000 liegt.

Als weitere Beispiele seien hier auch die Umsetzungsprodukte von Monovinylethern oder Acetalen mit den vorstehend genannten Polyolen aufgeführt, die erhalten werden, wenn in einem ersten Schritt das Polyol mit dem Monovinylether oder mit dem Acetal unter Bildung eines neuen Acetals umgesetzt wird, das dann in einem zweiten Schritt zu einem Polyvinylether gespalten wird. Als Beispiel hierzu sei der Trisisopropenylether des Trimethylolpropans genannt. Geeignet sind auch Additionsprodukte von hydroxygruppenhaltigen Monovinylethern wie z.B. Ethylenglykol-, 1,4-Butylenglykolmonovinylether oder Methanoldihydropyran an Polyisocyanate wie z.B. Tetramethylendiisocyanat, Hexamethylendiisocyanat, 2.2.4-Trimethylhexamethylendiisocyanat, 1,12-Dodecandiisocyanat, Cyclohexan-1,3- und 1,4-diisocyanat, 1-Isocyanato-3,3,5-trimethyl-5-isocyanato-methylcyclohexan (= Isophoron-diisocyanat, IPDI), Perhydro-2,4′- und/oder -4,4′-diphenyl-methandiisocyanat, 1,3- und 1,4-Phenylendiisocyanat, 2,4-und 2,6-Toluylendiisocyanat, Diphenylmethan-2,4′- und/oder -4,4′-diisocyanat, 3,2′- und/oder 3,4-Diisocyanato-4-methyl-diphenylmethan, Naphthylen-1,5-diisocyanat, Triphenylmethan-4,4′,4″-triisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophonatgruppen, Isocyanuratgruppen, Urethangruppen, acylierte Harnstoffgruppen und Biuretgruppen aufweisende Polyisocyanate.

Besonders gut für das erfindungsgemäße Verfahren geeignet sind die bekannten Polyisocyanate, die hauptsächlich bei der Herstellung von Lacken eingesetzt werden z.B. Biuret-, Isocyanat- oder Urethangruppen-aufweisende Modifizierungsprodukte der obengenannten einfachen Polyisocyanate, insbesondere Tris-(6-Isocyanatohexyl)-biuret oder niedermolekulare, Urethangruppen-aufweisende Polyisocyanate, wie sie durch Umsetzung von im Überschuß eingesetztem IPDI mit einfachen mehrwertigen Alkoholen des Molekulargewichtsbereiches 62-300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisenden Präpolymeren, wie sie insbesondere durch Umsetzung der obengenannten einfachen Polyisocyanate, vor allem Diisocyanate mit unterschüssigen Mengen an organischen Verbindungen mit mindestens zwei gegenüber Isocyanatgruppen reaktionsfähigen Gruppen zugänglich sind. Als solche kommen insbesondere insgesamt mindestens zwei Aminogruppen und/oder Hydroxylgruppen aufweisende Verbindungen des Molekulargewichtsbereiches 300 bis 10000, vorzugsweise 400 bis 6000 zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltigen Acrylatharze verwendet.

In diesen bekannten Präpolymeren entspricht das Verhältnis von Isocyanatgruppen zu gegenüber NCO reaktiven Wasserstoffatomen 1,05 bis 10:1, vorzugsweise 1,1 bis 3:1, wobei die Waserstoffatome vorzugsweise aus Hydroxylgruppen stammen.

Die erfindungsgemäße Härtungskomponente B) ist in der vorliegenden Beschreibung als einheitliche chemische Individuum dargestellt. In der Praxis ergeben sich vielfach infolge der Multifunktionalität von Ausgangsstoffen statistische Gemische. Für die Verwendbarkeit als Härtergemäß der Erfindung spielt das keine Rolle. Selbstverständlich können auch Gemische von verschiedenen Enol- bzw. Vinylethern zum Einsatz kommen. In manchen Fällen kann es auch zweckmäßig sein, die erfindungsgemäßen Härter B) zusammen mit bekannten, vorzugsweise isocyanatfreien Härtern, wie Umesterungshärter zu verwenden, sofern dabei die erfindungsgemäßen Katalysatoren nicht stören.

Die erfindungsgemäß eingesetzten Verbindungen A) besitzen Hydroxylgruppen, die mit den Enolether- bzw. Vinylethergruppen des Härters B) während des Härtungsprozesses reagieren. Die Hydroxylzahl beträgt im allgemeinen 30 bis 250, vorzugsweise 45 bis 200 und insbesondere 50 bis 180 mg KOH/g, während das Hydroxyl-Äquivalentgewicht derartiger Verbindungen A) zumeist zwischen 150 und 1000, vorzugsweise zwischen 200 bis 500 liegt. Diese OH-gruppenhaltigen Verbindungen A) können gegebenenfalls noch andere funktionelle Gruppen enthalten, wie Carboxylgruppen. Die Säurezahlen liegen dabei aber im allgemeinen unterhalb von 30, vorzugsweise unterhalb von 20. Gegebenenfalls können diese Verbindungen A) auch C=C-Doppelbindungen aufweisen.

Das Molekulargewicht (Gewichtsmittel, $\overline{M}$ w) von A), bestimmt mittels Gelchromatographie (Polystyrolstandard), liegt üblicherweise im Bereich von etwa 300 bis etwa 50 000, vorzugsweise etwa 5000 bis etwa 20 000. In Sonderfällen kann das Molekulargewicht jedoch 100.000 und mehr betragen. Als Polymere kommendabei Polymerisate, Polykondensate oder Polyadditionsverbindungen in Betracht.

Beispiele für Verbindungen A) sind OH-gruppenhaltige Kunstharze (Polyole), wie Polyetherpolyole, Polyacetalpolyole, Polyesteramidpolyole, Epoxidharzpolyole oder deren Umsetzungsprodukte mit $CO_2$, Phenolharzpolyole, Polyharnstoffpolyole, Polyurethanpolyole, Celluloseester-und -etherpolyole, teilweise verseifte Homo- und Copolymerisate von Vinylestern, teilweise acetalisierte Polyvinylalkohole, Polyesterpolyole oder Acrylatharzpolyole, wobei die beiden letzteren bevorzugt sind. Derartige Polyole, die auch in Mischung eingesetzt werden können, sind beispielsweise in der DE-Offenlegungsschrift 31 24 784 beschrieben.

Die bevorzugt eingesetzten Polyesterpolyole werden in bekannter Weise durch Umsetzung von mehrwertigen, vorzugsweise zweiwertigen und gegebenenfalls zusätzlich dreiwertigen Alkoholen mit mehrwertigen, vorzugsweise zweiwertigen Carbonsäuren, gegebenenfalls im Gemisch mit Monocarbonsäuren erhalten. Anstelle der freien Polycarbonsäuren können auch die entsprechenden Polycarbonsäureanhydride oder entsprechende Polycarbonsäureester von einwertigen Alkoholen mit 1-6 C-Atomen oder deren Gemische zur Herstellung der Polyester verwendet werden.

Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele für solche Carbonsäuren und deren Derivate seien genannt: Bernsteinsäure, Adipinsäure, Korksäure, Azelainsäure, Sebacinsäure, Phthalsäure, Terephthalsäure, Isophthalsäure, Trimellithsäure, Pyromellithsäure, Tetrahydrophthalsäure, Hexahydrophthalsäure, Di- und Tetrachlorphthalsäure, Endomethylentetrahydrophthalsäure und ihr Hexachlorderivat, Glutarsäure, Maleinsäure, Fumarsäure bzw. - soweit zugänglich - deren Anhydride, dimere und trimere Fettsäuren, wie Ölsäure, gegebenenfalls in Mischung mit monomeren Fettsäuren, Terephthalsäuredimethylester, Terephthalsäure-bis-glykolester, weiterhin cyclische Monocarbonsäuren, wie Benzoesäure, p-tert.-Butylbenzoesäure oder Hexahydrobenzoesäure.

Als mehrwertige Alkohole kommen z.B. Ethylenglykol, Propylenglykol-(1,2) und -(1,3), Butylenglykol-(1,4)- und -(2,3), Di-$\beta$-hydroxyethylbutandiol, Hexandiol-(1,6), Octandiol-(1,8), Neopentylglykol, Cyclohexandiol, 1,4-Bis-(hydroxymethyl)-cyclohexan, 2,2-Bis-(4-hydroxycyclohexyl)-propan, 2,2-Bis-(4,($\beta$-hydroxyethoxy)phenyl)-propan, 2-Methyl-1,3-propandiol, Glycerin, Trimethylolpropan, Hexantriol-(1,2,6), Butandiol-(1,2,4), Tris-($\beta$-hydroxyethyl)-isocyanurat, Trimethylolethan, Pentaerythrit, Chinit, Mannit, Sorbit, Formose und deren Hydroxyalkylierungsprodukte, ferner Diethylenglykol, Triethylenglykol, Tetraethylenglykol, Polyethylenglykole, Dipropylenglykol, Tripropylenglykol, Polypropylenglykole, Dibutylenglykol, Polybutylenglykole und Xylylenglykol in Frage. Auch Polyester, die aus oder mit Lactonen, z.B. $\epsilon$-Caprolacton oder Hydroxycarbonsäuren, wie z.B. Hydroxypivalinsäure, $\omega$-Hydroxydecansäure, $\omega$-Hydroxycapronsäure, Thioglykolsäure erhalten werden, können eingesetzt werden.

Bevorzugte Polyester sind z.B. auch die Reaktionsprodukte von Polycarbonsäuren und Glycidylverbindungen, wie sie z.B. in der DE-Offenlegungsschrift 24 10 513 beschrieben sind.

Die Herstellung der erfindungsgemäßen Polyester erfolgt in an sich bekannter Weise nach Methoden wie sie beispielsweise in "Ullmanns Enzyklopädie der technischen Chemie, Verlag Chemie Weinheim, 4. Auflage (1980), Band 19, Seiten 61 ff. oder von H. Wagner und H.F. Sarx in "Lackkunstharze", Carl Hanser Verlag, München (1971), Seiten 86-152 ausführlich beschrieben sind. Die Veresterung erfolgt gegebenenfalls in Gegenwart einer katalytischen Menge eines üblichen Verestarungskatalysators wie z.B. Säuren, Basen oder Übergangsmetallverbindungen, beispielsweise Titantetrabutylat bei ca. 80-260° C, vorzugsweise 100-200° C. Die Veresterungsreaktion wird so lange durchgeführt, bis die angestrebten Werte für die Hydroxyl- und Säurezahl erreicht sind.

Bevorzugte Acrylatharzpolyole, die als Komponente A) verwendet werden können, sind Homo- oder Copolymerisate. Diese leiten sich beispielsweise von den nachstehenden Monomeren ($b_1$) ab, wobei die übrigen Monomeren ($b_2$) bis ($b_7$) gegebenenfalls miteingesetzt werden können:

($b_1$) Arylat- und Methacrylat (= (Meth)acrylat)-Monomere der allgemeinen Formel

$$CH_2 = \overset{\displaystyle R^1}{\overset{|}{C}} - X \qquad (1)$$

in der R' und X stehen für:

$R^1$ = H, Methyl;

$X = \overset{O}{\overset{\|}{C}} - OH$;

$= \overset{O}{\overset{\|}{C}} - OR^2$ mit $R^2$ = gegebenenfalls fluorhaltiger ($C_1$-$C_{25}$)Alkylrest, vorzugsweise ($C_1$-$C_{18}$)Alkyl;

=

$$= \overset{O}{\overset{\|}{C}}-O(R^4O)_rR^5$$

mit $R^4$ = verzweigt oder unverzweigt $(C_1\text{-}C_{16})$Alkyl, das gegebenenfalls Hydroxylgruppen und/oder Estergruppen enthalten kann, $R^5$ = H, $(C_1\text{-}C_4)$Alkyl, vorzugsweise Wasserstoff, Methyl, Ethyl und r = 1 bis 10, vorzugsweise 1 bis 6;

= $\overset{O}{\overset{\|}{C}}$ $-NR^6R^7$, worin $R^6$ H, Alkyl mit vorzugsweise 1 bis 6 C-Atomen und $R^7$ unabhängig von $R^6$ H oder Alkyl mit vorzugsweise 1 bis 6 C-Atomen bedeutet;

= CN;

= glycidylgruppenhaltiger Acylrest mit vorzugsweise 1 bis 6 C-Atomen, insbesondere der

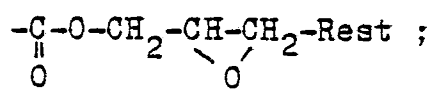

= carbonatgruppenhaltiger Acylrest mit vorzugsweise 1 bis 6 C-Atomen, insbesondere der

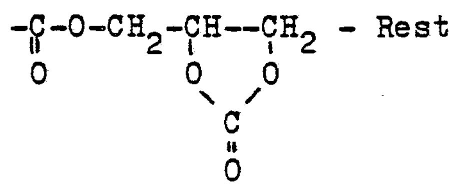

Vertreter dieser Monomeren ($b_1$) sind beispielsweise Acryl- oder Methacrylsäure (= (Meth)acrylsäure), Fumar-, Malein- oder Itaconsäure, wobei (Meth)acrylsäure bevorzugt ist. Beispiele hierfür sind Ester dieser Säuren mit Ethylenglykol, Propylenglykol-1,2 oder -1,3, Butylenglykol-1,4, Trimethylolpropan, Glycerin udgl.; weiterhin Umsetzungsprodukte dieser Säuren mit endständigen Epoxiden, wie z.B. Hexenoxid oder Dodecenoxid sowie Umsetzungsprodukte dieser Säuren mit Glycidylestern, vorzugsweise von in α-Stellung verzweigten, gesättigten aliphatischen Monocarbonsäuren mit 8 - 14 C-Atomen, wie z.B. ®Cardura E 10 (Glycidylester der "Versaticsäure"). Sofern entsprechende Ester von ungesättigten Dicarbonsäuren verwendet werden, sollen diese nur eine C=C-Doppelbindung enthalten. Bevorzugt sind Hydroxyethyl- oder Hydroxypropyl(meth)acrylat. Besonders elastische Eigenschaften sind beim Einsatz eines Reaktionsproduktes von Hydroxyalkyl-(meth)acrylat mit ε-Caprolacton zu erhalten. Als weitere funktionelle Ester können Glycidylmethacrylat sowie das daraus durch Addition von Kohlendioxyd erhaltene cyclische Carbonat eingesetzt werden.

($b_2$) Olefine, wie Ethylen, Propylen;

($b_3$) vinylaromatische Kohlenwasserstoffe, wie vorzugsweise Styrol oder substituierte Styrole, wie α-Methylstyrol und p-Methylstyrol;

($b_4$) Ester, Säuren, Amide oder Nitrile von ungesättigten Mono- oder Dicarbonsäuren. Die Ester sind dabei bevorzugt. Als Säuren kommen die gleichen wie vorstehend unter ($b_1$) genannt in Frage. Die Alkoholkomponente in den Estern enthält im allgemeinen 1 bis 18, vorzugsweise 1 bis 13 C-Atome. Beispiele hierfür sind: Methyl-, Ethyl-, Butyl-, 2-Ethylhexyl-, Lauryl- oder Stearylester der (Meth)acrylsäure. Als Alkoholkomponente sind auch Fettalkohole, Cycloalkohole, Monoalkylether von Ethylen- oder Propylenglykolen sowie Versaticalkohol geeignet. Als Säuren kommen z.B. in Frage: Acryl-, Methacryl-, Malein-, Fumar- oder Itaconsäure sowie 2-Acrylamido-2-methylpropansulfonsäure. Daneben sind auch substituierte und unsubstituierte Amide dieser Säuren geeignet. Substituierte Amide können sein: Mono- und Dialkylamide mit 1 bis 10 C-Atomen im Alkylrest, veretherte und unveretherte Hydroxyalkylamide mit 1 bis 6 C-Atomen im Alkyl- und im Etherteil, Mono- und Dialkylaminoalkylamide mit 1 bis 6 C-Atomen im Alkylrest. Konkret genannt seien hier: (Meth)acrylsäureamid, Hydroxyethyl- oder Hydroxypropyl(meth)-acrylamid. Als Nitril ist beispielsweise (Meth)acrylnitril zu nennen;

($b_5$) ungesättigte Ester einer vorzugsweise in α-Stellung verzweigten aliphatischen, gesättigten Monocarbonsäure, beispielsweise Vinylester von Carbonsäuren mit 2 bis 20, vorzugsweise 2 bis 6 C-Atomen, wie Vinylacetat, Vinylpropionat, Vinyllinolat. Vorzugsweise handelt es sich hierbei jedoch um Vinylester von in α-Stellung verzweigten Carbonsäuren mit 8 bis 14 C-Atomen, insbesondere α-Monoalkan- oder α-Dialkanmonocarbonsäuren wie die sogenannten "Versaticsäuren" (Vinylversatat);

($b_6$) Vinylverbindungen (andere als Vinylester), wie Vinylether, beispielsweise Methyl-, Ethyl- oder Alkylvinylether mit Alkylresten mit 3 bis 6 Kohlenstoffatomen; Allylether wie Allylglycidylether, N-Vinylpyrrolidon;

($b_7$) Monomere mit Urethangruppen, wie Vinylurethane, erhalten durch Umsatz von Vinylisocyanat mit üblichen Verkappungsmitteln; Beispiele für diese letzte Gruppe sind: N-Vinylcarbaminsäure-tert.-butylester, N-Vinylcarbaminsäure-cyclohexylester, N-Vinylcarbaminsäure-β-Caprolactam-Addukt.

Innerhalb der obigen Gruppen ($b_1$) bis ($b_7$) können auch Gemische der einzelnen Vertreter eingesetzt werden.

Die Herstellung dieser Acrylatharzpolyole erfolgt dabei in bekannter Weise, vorzugsweise nach dem Radikalkettenmechanismus und nach den üblichen Methoden der Substanz-, Lösungs-, Fällungs-, Dispersions-, Emulsions- oder Perlpolymerisation. Bevorzugt sind die Substanz-, Lösungs-oder Emulsionspolymerisation. Zur Auslösung der Polymerisation werden übliche radikalbildende Initiatoren verwendet. Geeignete Initiatoren sind beispielsweise Wasserstoffperoxid, organische Hydroperoxide und Peroxide, wie Di-tert.Butylperoxid, t-Butylperbenzoat, Dicumylperoxid, p-Methanhydroperoxid, tert. Butylhydroperoxid, Cumolhydroperoxid, Bernsteinsäureperoxid, ferner unter Polymerisationsbedingungen in Radikale zerfallende aliphatische Azoverbindungen, wie 2,2-Azo-bis-2,4-dimethylvaleronitril, 2,2-Azo-bis-isobutyronitril und analoge Azonitrile. Die Initiatoren werden im allgemeinen in einer Menge von 0,05 bis 5 Gew.-%, vorzugsweise 0,1 bis 3,0 Gew.-%, bezogen auf die Monomerenmenge, verwendet. Die optimale Menge und der optimal wirksame Initiator lassen sich durch Versuche leicht ermitteln.

In gewissen Fällen kann es wünschenswert sein, der Polymerisationsmischung auch andere, die Kettenlänge modifizierende Mittel (Regler) zuzugeben, wie Mercaptane, dimerisiertes α-Methylstyrol und ähnliche. Von diesen Verbindungen werden im allgemeinen 0,1 bis 5,0 Gew.-%, vorzugsweise 0,1 bis 3,0 Gew.-%, bezogen auf Gesamtmenge der Monomeren, verwendet.

Wird in Lösung polymerisiert, so kommen hierfür die üblichen, unter den Polymerisationsbedingungen inerten organischen Lösemittel in Betracht, wie beispielsweise halogenierte Kohlenwasserstoffe, Ether, wie Diethylether, Diethylenglykoldimethylether, Tetrahydrofuran oder Dioxan, Ketone, wie beispielsweise Methylethylketon, Aceton, Cyclohexanon etc., Ester wie Butylacetat, Ethylglykolacetat, Methylglykolacetat, Methoxypropylacetat, aliphatische oder aromatische Kohlenwasserstoffe, wie Hexan, Heptan, Cyclohexan, Benzol, Xylol und Toluol. Die Lösemittel können dabei einzeln oder im Gemisch eingesetzt werden.

Weitere für die erfindungsgemäßen Zwecke geeigneten Acrylatharzpolyole sind beispielsweise in der DE-Patentanmeldung P 36 44 372.7 sowie in der EP-Anmeldung 86.117 167.6 beschrieben.

Das gegenseitige Mengenverhältnis der Komponenten A) und B), hängt von der Anzahl der Hydroxylgruppen in der Verbindung A) und der Summe der Doppelbindungen in Verbindung B) ab. Zur Erreichung einer ausreichenden Vernetzungsdichte beträgt das Verhältnis von aktiven H-Atomen (Hydroxylgruppen) in A) zu Doppelbindungen in B) im allgemeinen etwa 2:1 bis 1:2, vorzugsweise etwa (0,8 bis 1,2):1 bis etwa 1:-(0,8 bis 1,2).

Als Komponente C) (Katalysatoren) sind Lewis- und Brönstedt-Säuren, vorzugsweise die letzteren geeignet. Beispiele hierfür sind Schwefelsäure, Sulfonsäuren wie z.B. p-Toluolsulfonsäure, Methansulfonsäure, Benzolsulfonsäure, Dodecylbenzolsulfonsäure, Alkylxylolsulfonsäuren, Dinonylnaphthalinsulfonsäure, Campfersulfonsäure, Naphthalindisulfonsäure und Dinonylnaphthalindisulfonsäure sowie deren Salze mit Pyridin; weiterhin seien hier Bortrifluorid sowie dessen Komplexe mit Ethern und/oder Alkoholen genannt. Die Menge des Katalysators beträgt im allgemeinen 0,01 bis 5, vorzugsweise 0,02 bis 2 Gew.-%, bezogen auf die Summe von Komponente A) und B). Sie kann je nach der Reaktivität der Verbindungen A) und B), der Art des gegebenenfalls vorhandenen Lösungsmittels, der Wirksamkeit des Katalysators und der beabsichtigten Verfahrensführung variiert werden.

Die Verdünnungsmittel, die als Komponente D) gegebenenfalls in den härtbaren Mischungen gemäß der Erfindung vorhanden sein können, sollen gegenüber den Mischungskomponenten inert sein. Es eignen sich hierfür die üblichen organischen Lösungsmittel, wie beispielsweise halogenierte Kohlenwasserstoffe, Ether, wie Diethylether, Dimethyldiglykol, Tetrahydrofuran oder Dioxan, Ketone, wie beispielsweise Methylethylketon, Aceton, Cyclohexanon und ähnliche, Ester wie Butylacetat, Ethylglykolacetat, Methylglykolacetat, Methoxypropylacetat, aliphatische und/oder aromatische Kohlenwasserstoffe, wie Hexan, Heptan, Cyclohexan, Benzol, Xylol, Toluol sowie aromatische Lösemittel im Siedebereich von ca. 150 bis 180 °C (höhersiedende Mineralölfraktionen wie ®Solvesso). Die Lösemittel können dabei einzeln oder im Gemisch

eingesetzt werden, letzteres insbesondere dann, wenn die Lösekraft des einzelnen Lösemittels nicht ausreichen sollte, da dessen Polarität unter Umständen zu gering ist.

Im Rahmen der Komponente D) können die erfindungsgemäßen Mischungen auch die üblichen Zusatzstoffe enthalten, wie Farbstoffe, Pigmente, Pigmentpasten, Füllstoffe, Weichmacher, Antioxydantien, Stabilisatoren, oberflächenaktive Mittel, Verlauf- und Verdickungsmittel, Reaktivverdünner und neutralisierende Stoffe. Diese Zusatzstoffe, die in üblichen Mengen eingesetzt werden, können den erfindungsgemäßen Mischungen gegebenenfalls erst unmittelbar vor der Verarbeitung zugegeben werden.

Als Farbstoffe bzw. Pigmente, die anorganischer oder organischer Natur sein können, werden beispielsweise genannt: Titandioxyd, Graphit, Ruß, Zinkchromat, Strontiumchromat, Bariumchromat, Bleichromat, Bleicyanamid, Bleisilikochromat, Calciummolybdat, Manganphosphat, Zinkoxyd, Zinksulfid, Cadmiumsulfid, Chromoxyd, Nickeltitangelb, Chromatitangelb, Eisenoxydrot, Eisenoxydschwarz, Ultramarinblau, Phthalocyaninkomplexe, Napthalrot oder dergleichen.

Geeignete Füllstoffe sind z.B. Talkum, Glimmer, Kaolin, Kreide, Quarzmehl, Asbestmehl, Schiefermehl, Bariumsulfat, verschiedene Kieselsäuren, Silikate oder dergleichen.

Zur Herstellung der erfindungsgemäßen härtbaren Mischungen werden die Komponenten A), B) und C) sowie gegebenenfalls zusätzlich D) gemischt. Bei Komponenten mit niedriger Viskosität kann dies in Substanz erfolgen, wobei gegebenenfalls auf höherer Temperaturen erwärmt wird. Produkte höhere Viskosität werden - falls die härtbaren Mischungen nicht als Pulverlacke eingesetzt werden - vor der Mischung in den erwähnten Verdünnungsmitteln gelöst oder dispergiert.

Die Härtung der erfindungsgemäßen Mischungen läuft in Gegenwart der Härtungskatalysatoren sehr rasch ab und erfolgt im allgemeinen bei -10 bis 180 °C, vorzugsweise 0 bis 100, insbesondere 20 bis 80 °C. Zum Beispiel erhält man bei Raumtemperatur nach 2 bis 24 Stunden oder bei 60 °C nach 10 bis 40 Minuten bereits Produkte mit guter Härte.

Da vorzugsweise von oligomeren und/oder polymeren Verbindungen A) und B) ausgegangen wird, erhält man oligomere und/oder polymere vernetzte Reaktionsprodukte.

Die Härtungsreaktion läßt sich in einer Stufe durchführen, indem man beispielsweise mit äquivalenten Anteilen der Komponenten A) und B) arbeitet. Die Topfzeit und Eigenschaften des Produktes hängen daher von den Verfahrensbedingungen, d.h. von der Art und der Menge der Ausgangsstoffe, der Dosierung des Katalysators und der Temperaturführung ab. So läßt sich die Elastizität des vernetzten Produktes innerhalb eines Toleranzbereiches z.B. durch die Kettenlänge der für A) und B) eingesetzten Oligomeren und/oder Polymeren steuern. Obwohl die Härtung in der Regel diskontinuierlich betrieben wird, liegt es auch im Rahmen der Erfindung, das Vermischen der Komponenten und den Reaktionsverlauf kontinuierlich durchzuführen, beispielsweise mittels einer automatischen Lackiervorrichtung.

Die erfindungsgemäßen Mischungen zeigen Topfzeiten, die je nach Auswahl der Verbindung A) und B) sowie nach Art und Menge des Katalysators bzw. deren Katalysatorkombination zwischen 5 min. und etwa 12 Stunden schwanken. Dadurch ist eine hohe Verarbeitungssicherheit gewährleistet. Aufgrund dieser vorteilhaften Eigenschaft des Produktes im Zusammenhang mit seiner raschen und einwandfreien Härtung bei Ramtemperatur oder erhöhter Temperatur und seiner chemischen Beständigkeit ist es hervorragend als Bindemittel für Lacke geeignet.

Die erfindungsgemäßen Mischungen können wegen ihrer günstigen Eigenschaften eine vielseitige technische Anwendung finden z.B. zur Herstellung von Formkörpern (Gießharze) z.B. für den Werkzeugbau oder zur Herstellung von Überzügen und/oder Zwischenbeschichtungen auf vielerlei Substraten, z.B. auf solchen organischer oder anorganischer Natur, wie Holz, Holzfaserstoffe (Holzversiegelung), Textilien natürlicher oder synthetischer Herkunft, Kunststoffe, Glas, Keramik, Baustoffe, wie Beton, Faserplatten, Kunststeine, insbesondere jedoch auf Metall. Weiterhin können die erfindungsgemäßen Mischungen als Bestandteile von Klebern, Kitten, Laminierharzen, Kunstharzzementen und insbesondere als Bestandteile von Anstrichmitteln und Lacken zum Beschichten von Industriegegenständen, Haushaltsgeräten, Möbeln sowie im Bauwesen, wie z.B. Kühlgeräten, Waschmaschinen, Elektrogeräten, Fenstern, Türen, eingesetzt werden. Das Aufbringen kann durch Streichen, Sprühen, Tauchen erfolgen oder elektrostatisch durchgeführt werden.

Ein bevorzugtes Anwendungsgebiet für die erfindungsgemäßen Mischungen liegt in der Herstellung von Kraftfahrzeuglacken (Grund- und/oder Decklacke) und insbesondere Autoreparaturlacken. Hierbei ist die Xylolbeständigkeit und damit gleichzeitig eine gute Beständigkeit gegenüber Superbenzin vor allem von Interesse. Da die erfindungsgemäßen Mischungen nach einer bevorzugten Ausführungsform der Erfindung in verhältnismäßig kurzer Zeit bei Raumtemperatur selbst härten kann, ohne daß umweltbelastende Substanzen frei werden, ist eine Verwendung als Autoreparaturlack von erheblicher praktischer Bedeutung.

In den nachstehenden Vorschriften und Beispielen bedeuten % jeweils Gew.-% und T jeweils Gew.-Teile. Unter vermindertem Druck wird jeweils derjenige der Wasserstrahlpumpe verstanden.

Beispiele

a) Herstellung der Härterkomponente B)

1) 12,3 Teile Trimethylolpropan und 66,7 Teile 3,4-Dihydro-2H-pyran-2-yl-methyl-3,4-dihydro-2H-pyran-2-carboxylat (im folgenden mit DHPDHPC abgekürzt) wurden in 34 Teilen Butylacetat suspendiert und nach Zugabe von 0,1 Teilen Dodecylbenzolsulfonsäure 24 Stunden bei Raumtemperatur gerührt. Nach Filtration erhielt man eine farblose Harzlösung.
Äquivalentgewicht: 380; Feststoffgehalt: 70 %.

2) 24,2 Teile Trishydroxyethylisocyanurat und 55,8 Teile DHPDHPC wurden in 33 Teilen Butylacetat suspendiert und nach Zugabe von 0,1 Teilen Dodecylbenzolsulfonsäure bei Raumtemperatur bis zur Auflösung des Niederschlages gerührt. Nach Filtration erhielt man eine klare Harzlösung.
Äquivalentgewicht: 718; Feststoffgehalt: 71 %.

3) 14,3 Teile Trimethylolpropan und 65,7 Teile DHPDHPC wurden in 36 Teilen Butylacetat suspendiert und nach Zugabe von 0,15 Teilen Campfersulfonsäure bei Raumtemperatur gerührt. Nach 24 Stunden wurde filtriert. Man erhielt eine farblose Harzlösung.
Äquivalentgewicht: 435; Feststoffgehalt: 69 %.

4) 191 Teile eines cyanuratgruppenhaltigen Polyisocyanates auf Basis von Hexamethylendiisocyanat (Desmodur® N 3300) und 19 Teile Trimethylhexamethylendiisocyanat wurden in 149 Teilen Propylenglykolmonomethyletheracetat gelöst und nach Zugabe von 0,1 Teilen Dibutylzinndilaurat binnen 40 min bei 50 °C mit einer Mischung aus 137 Teilen 1,4-Butylenglykolmonovinylether und 0,35 Teilen Hydrochinonmonomethylether versetzt.
Anschließend wurde bis zu einem Isocyanatgehalt von < 0,1 % nachgerührt. Man erhielt eine hellgelbe Harzlösung.
Äquivalentgewicht: 420; Feststoffgehalt: 70 %.

5) 245 Teile eines cyanuratgruppenhaltigen Polyisocyanates auf Basis von Isophorondiisocyanat (N=C=O-Gehalt: 17,1 %) wurden in 241 Teilen Butylacetat gelöst und nach Zugabe von 0,1 Teilen Dibutylzinndilaurat binnen 60 min bei 50 °C mit einer Mischung aus 116 Teilen 1,4-Butylenglykolmonovinylether und 0,5 Teilen Hydrochinonmonomethylether versetzt.
Anschließend wurde bis zu einem Isocyanatgehalt von < 0,1 % nachgerührt. Man erhielt eine leicht gelblich gefärbte Harzlösung.
Äquivalentgewicht: 600; Feststoffgehalt: 60 %.

b) Herstellung der härtbaren Mischung und anwendungstechnische Prüfung des Härtungsproduktes

Als Bindemittel (= Komponente A)) wurden die nachstehenden OH-gruppenhaltigen Harze in gelöster Form eingesetzt.

| Nr. | Bezeichnung | Merkmal | OH-Zahl | Feststoffgehalt (Gew.-%) |
|---|---|---|---|---|
| 1 | (R)Synthacryl SC 303 | hydroxylgruppenh. Acrylatharz | 78 1) | 65 2) |
| 2 | (R)Macrynal SM 510 n | hydroxylgruppenh. Acrylatharz | ca. 160 1) | 60 3) |
| 3 | (R)Macrynal VSM 2155 | hydroxylgruppenhl Acrylatharz | ca. 200 1) | 60 4) |
| 4 | (R)Alftalat AN 950 | hydroxylgruppenh. Polyesterharz | 95 1) | 70 5) |

1) bestimmt nach DIN 53783 bezogen auf Festharz
2) gelöst in Butylacetat
3) gelöst in Xylol/Ethylglykolacetat (2:1)
4) gelöst in Ethylglykolacetat
5) gelöst in Xylol

Als Katalysatoren (= Komponente C)) wurde die nachstehenden Verbindungen in Form von entsprechenden Lösungen verwendet:

| Nr. | Struktur | Lösungsmittel | Feststoffgehalt (Gew.-%) |
|---|---|---|---|
| 1 | p-Toluolsulfonsäure | Diglykoldimethylether | 10 |
| 2 | Dodecylbenzolsulfonsäure | Butylacetat | 10 |
| 3 | Campfersulfonsäure | Diglykoldimethylether | 10 |
| 4 | Dinonylnaphthalin-disulfonsäure | Butylacetat | 10 |
| 5 | Dinonylnaphthalin-monosulfonsäure | Butylacetat | 10 |

Zur Herstellung der härtbaren Mischungen wurden die in der nachfolgenden Tabelle angegebenen Gewichtsmengen von Bindemittel und Härter gemischt und mit Butylacetat auf einen Feststoffgehalt von 50 % verdünnt. Das erhaltene Beschichtungsmaterial wurde nach Zumischung des angegebenen Katalysators mittels eines Aufziehrakels in einer Naßfilmstärke von 100 µm auf Glasplatten aufgebracht und bei Raumtemperatur bzw. bei 60 °C (45 min) gehärtet.

Die in der nachstehenden Tabelle benutzten Abkürzungen bedeuten:
HH : Heißhärtung = 45 min bei 60 °C
RT : Raumtemperatur

i. O. : keine Verletzung des Lackfilmes erkennbar
DHPDHPC : 3.4-Dihydro-2H-pyran-2yl-methyl-3,4-dihydro-2H-pyran-2-carboxylat
l. Anl. : leichtes Anlösen der Filmoberfläche
Anl. : Anlösen der Filmoberfläche

**Tabelle**

**Klarlackfilm (100 µ Naßfilm)**

| Bsp. | Bindemittel (Komp. A)) Typ | Menge | Härter (Komp. B)) Typ | Menge | Katalysator (Komp. C)) Typ | Menge | Härtungs-temperatur | Pendelhärte nach König (s) nach 1 Tag | 10 Tagen | Beständigkeit gegen (nach 10 Tagen) Superbenzin | Xylol |
|---|---|---|---|---|---|---|---|---|---|---|---|
| 1 | 1 | 66,3 | 2 | 29,3 | 1 | 0,13 | HH | 132 | 158 | l. Anl. | Anl. |
| 2 | 2 | 46,8 | 1 | 25,6 | 1 | 0,30 | RT | 106 | 163 | i. O. | Anl. |
| 3 | 2 | 46,8 | 2 | 39,0 | 1 | 0,40 | RT | 95 | 152 | i. O. | l. Anl. |
| 4 | 2 | 46,8 | DHPDHPC | 8,3 | 1 | 0,31 | RT | 112 | 174 | i. O. | l. Anl. |
| 5 | 2 | 46,8 | 3 | 32,7 | 4 | 0,20 | RT | 115 | 168 | i. O. | l. Anl. |
| 6 | 2 | 46,8 | 2 | 37,0 | 3 | 0,30 | HH | 147 | 187 | i. O. | i. O. |
| 7 | 2 | 46,8 | 2 | 38,5 | 2 | 0,40 | HH | 143 | 175 | i. O. | i. O. |
| 8 | 3 | 46,7 | 2 | 48,8 | 1 | 0,20 | RT | 94 | 150 | i. O. | i. O. |
| 9 | 3 | 46,7 | DHPDHPC | 10,9 | 4 | 0,10 | RT | 101 | 153 | i. O. | i. O. |
| 10 | 4 | 50,7 | 2 | 30,0 | 2 | 0,35 | HH | 93 | 145 | l. Anl. | Anl. |
| 11 | 4 | 50,7 | 1 | 20,5 | 1 | 0,50 | HH | 100 | 147 | Anl. | Anl. |
| 12 | 2 | 59,0 | 5 | 42,0 | 4 | 0,70 | HH | 92 | 148 | i. O. | l. Anl. |
| 13 | 3 | 47,0 | 5 | 42,0 | 5 | 0,90 | HH | 100 | 164 | i. O. | i. O. |
| 14 | 2 | 59,0 | 6 | 60,0 | 4 | 0,80 | HH | 94 | 158 | i. O. | i. O. |
| 15 | 3 | 47,0 | 6 | 60,0 | 4 | 0,70 | HH | 105 | 172 | i. O. | i. O. |

**Ansprüche**

1. Härtbare Mischungen auf der Basis von
A) Verbindungen, die Hydroxylgruppen enthalten,
B) härtenden Verbindungen,
C) Katalysatoren und
D) gegebenenfalls einem Verdünnungsmittel sowie gegebenenfalls weiteren Zusatzstoffen, dadurch gekennzeichnet, daß als härtende Verbindungen B) solche Verbindungen dienen, die mindestens zwei Enolether-Gruppen der Formel (I)

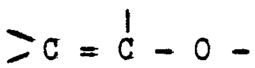 (I)

enthalten.

2. Härtbare Mischungen nach Anspruch 1, dadurch gekennzeichnet, daß die härtenden Verbindungen B) 2 bis 30 Gruppen der Formel (I) enthalten.

3. Härtbare Mischungen nach Anspruch 1 und/oder 2, dadurch gekennzeichnet, daß die härtenden Verbindungen B) die nachstehende Formel (II)

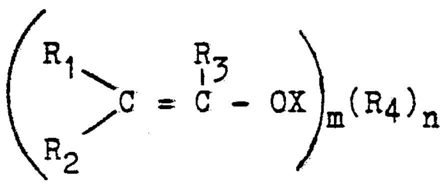 (II)

besitzen, in der bedeuten:

$R_1$, $R_2$, $R_3$ = gleich oder verschieden Wasserstoff, Kohlenwasserstoffrest, vorzugsweise Alkylrest mit 1 bis 10 C-Atomen, Cycloalkylrest mit 5 bis 12 C-Atomen oder Arylrest mit 6 bis 15 C-Atomen, wobei diese Reste $R_1$ bis $R_3$ jeweils auch Bestandteil eines vorzugsweise fünf- oder sechsgliedrigen Ringes sein können;

$R_4$ = ein m-wertiger, verzweigter oder unverzweigter Kohlenwasserstoffrest mit 1 bis 50 C-Atomen, der gegebenenfalls Heteroatome und/oder funktionelle Gruppen aus der Gruppe O, NH-, Ester-, Amid-, Urethan-, Harnstoff- und Ethergruppen enthalten kann;

X = chemische Bindung (n = 1), oder Kohlenwasserstoffrest mit 1 bis 10 C-Atomen, Cycloalkylrest mit 5 bis 12 C-Atomen oder Arylrest mit 6 bis 15 C-Atomen (n = 0), oder zusammen mit $R_1$ oder mit $R_2$ gleich Bestandteil eines gegebenenfalls substituierten, fünf- oder sechsgliedrigen Ringes, wobei $R_4$ dann an diesem Ring sitzt (n = 1);

m = mindestens 2;

n = 0 oder 1; mit der Maßgabe, daß bei n = 0 einer der Reste $R_1$ bis $R_3$ die Bedeutung von $R_4$ besitzen muß und daß bei n = 1 keiner der Reste $R_1$ bis $R_3$ die Bedeutung von $R_4$ hat.

4. Härtbare Mischung nach mindestens einem der Ansprüche 1 bis 3, dadurch gekennzeichnet, daß die härtende Verbindung B) die Formeln (III) oder (IV)

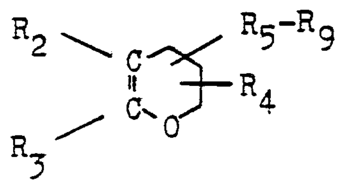

(III)

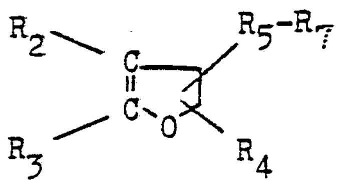

(IV)

aufweist, in denen $R_2$, $R_3$ und $R_4$ die obige Bedeutung haben und $R_5$ bis $R_9$ bzw. $R_5$ bis $R_7$ die gleiche Bedeutung wie $R_1$ bis $R_3$ besitzen.

5. Härtbare Mischungen nach mindestens einem der Ansprüche 1 bis 4, dadurch gekennzeichnet, daß es sich bei den Verbindungen B) um solche aus der Gruppe Ethylenglykoldivinylether, Butandioldivinylether, Butandioldiisopropenylether, Neopentylglykoldiisopropenylether, Tischtschenkoester des dimeren Acroleins oder Additionsprodukte dieser niedermolekularen Ether an Polyole handelt.

6. Härtbare Mischungen nach mindestens einem der Ansprüche 1 bis 4, dadurch gekennzeichnet, daß es sich bei den Verbindungen B) um Additionsprodukte von hydroxygruppenhaltigen Monovinylethern an Polyisocyanate handelt.

7. Härtbare Mischungen nach mindestens einem der Ansprüche 1 bis 6, dadurch gekennzeichnet, daß das Verhältnis von aktiven H-Atomen in Verbindung A) zu Doppelbindungen in Verbindung B) 2:1 bis 1:2 beträgt.

8. Härtbare Mischungen nach mindestens einem der Ansprüche 1 bis 7, dadurch gekennzeichnet, daß die Verbindung A) Hydroxyl-Zahlen von 30 bis 200 besitzt.

9. Härtbare Mischungen nach mindestens einem der Ansprüche 1 bis 8, dadurch gekennzeichnet, daß es sich bei der Verbindung A) um OH-gruppenhaltige Polyester, Polyether, Polyacetale, Polyeteramide, Epoxidharze, Phenol/Formaldehydharze, Polyurethane, Polyharnstoffe, Celluloseester, Celluloseether, Acrylatharze oder um teilweise verseifte Homo- oder Copolymerisate von Vinylestern sowie teilweise acetalisierte Polyvinylalkohole handelt.

10. Verwendung der Mischungen gemäß mindestens einem der Ansprüche 1 bis 9 zur Herstellung von Formkörpern oder Überzügen.

11. Verwendung der Mischungen gemäß mindestens einem der Ansprüche 1 bis 10 als Bestandteil in Lacken oder Klebstoffen.

12. Verwendung nach Anspruch 11, dadurch gekennzeichnet, daß es bei den Lacken um Autodecklacke oder um Autoreparaturlacke handelt.